# EUROPEAN PATENT SPECIFICATION

(11) **EP 1 471 206 B1**
(45) Date of publication and mention of the grant of the patent: **09.12.2009**
(21) Application number: 04076256.9
(22) Date of filing: 26.04.2004
(51) Int. Cl.: E06B 3/984, F16B 12/14, F16B 5/02

(54) **Fastening means, and method for making a casing using such a fastening means.**
Verbindungsmittel und Verfahren zur Herstellung eines Rahmens mit solchen Verbindungsmitteln
Moyen d'assemblage et procédé de construction d'un cadre avec de tels moyens d'assemblage

(30) Priority: 25.04.2003 NL 1023268
(43) Date of publication of application: 27.10.2004
(73) Proprietor: Kreunen Kunststoffen B.V., 7241 CR Lochem (NL)
(72) Inventor: Kreunen, Johan Bernhard, 7241 CR Lochem (NL)
(74) Representative: van Essen, Peter Augustinus

(56) References cited:
- EP-A- 0 219 556
- EP-A- 1 120 530
- BE-A- 569 260
- DE-A- 2 209 508
- DE-A- 4 125 850
- GB-A- 191 313 555
- NL-C1- 1 013 818
- US-A- 3 482 481

## Description

The invention relates to a fastening means, use of such a fastening means for the attachment of a first construction part to a second construction part, and to a method for mounting a bottom sill on a post using such a fastening means.

Fastening means are known in various shapes and sizes for various uses.

In practice a second construction part, such as a bottom sill, can be attached to a first construction part, such as a post, by providing the post with a hole in the cross-cut end, and providing the bottom sill with a hole and attaching the bottom sill to the post by means of a fastening means, by screwing the fastening means through the bottom sill and into the hole of the post.

A drawback is that this method takes time because the fastening means has to be screwed through the entire bottom sill and into the post.

In DE-A1-41 25 850 a fastening means is shown for mounting two construction parts at an adjustable distance from each other. A bolt having wooden screw thread at one end, provided with a head that is adjustable on it by means of screw thread, is screwed into both construction parts in the usual way. The adjustable head and the other part of the bolt are simultaneously engaged by a tool. Subsequently the head is engaged by another tool and rotated in opposite direction so that the head can be adjusted in axial direction in head direction with respect to the rest of the bolt. At its outside the head is provided with means for preventing the construction part in which the head is present from moving to the other construction part over the head. The bolt is designed to space construction parts apart. DE-A1-43 43 935 shows a similar fastening means.

GB-13,555 A.D. 1913 discloses a head fur screws for wood or metal or the like or other similar articles, and is designed so as to allow of these fastening means being screwed up but not unscrewed. It essentially consists in giving the head the general form of a truncated cone provided with shoulders practically parallel with the sides and interconnected in such away that the various sections of the head, through planes at right angles with its axis, form figures resembling that of a ratchet wheel. Under these conditions a socket key formed with a cavity corresponding to this head, enables the bolt to be tightened up in one direction of rotation but not in the opposite one.

US-3,482,481 discloses a drive for bolts including a drive head having a frustoconical shaped drive surface, and a drive member for operative engagement with said head.

EP-219556 discloses a screw for the adjustable mounting of an element of a substructure on walls or ceilings, which screw is provided with a socket-shaped part which can be mounted in a hole in the element and holds a part of the screw such that it can rotate but cannot move axially. A straight shank is provided between the screw head and the threaded part. In order to be able to mount the screw quickly and easily for simple production, the shank is provided with at least one annular collar.

It is an object of the invention to provide a fastening means offering an improved attachment, in particular an attachment having a permanent tensile or clamping force, a use of such a fastening means, and a method for using such a fastening means.

To that end the invention provides a fastening means according to claim 1.

The invention further provides use of a fastening means according to the invention for clampingly fastening a first construction part to a second construction part according to claim 14, and a method for mounting a bottom sill to a post according to claim 16.

By choosing a fastening means according to the invention and using it in accordance with the method according to the invention, the production can be accelerated. Moreover the attachment can be improved, and simple measures can be taken to for instance prevent damp from rising past the fastening means.

In the use according to the invention the fastening means is preferably screwed, pressed or pushed into the first construction part up to the stop, and subsequently the second construction part with a hole having a smaller diameter than the diameter of the head is arranged over the protruding part of the fastening means, with the protruding part of the fastening means in the hole. As a result a quick attachment of the second construction part to the first construction part is possible.

Various embodiments have been described in the sub claims.

Preferably the fastening means is used for attaching a first and a second elements to each other, wherein at least one of the elements, preferably construction parts, are preferably made of synthetic material, more specifically made of a thermoplastic synthetic material, such as PE or PP.

In an embodiment the engagement means are screw thread for forming a threaded end of the shank. As a result the fastening means can be arranged in a first element in a simple and reliable manner.

In an embodiment of the fastening means according to the invention the screw thread continues up to the stop.

In a further embodiment of the fastening means the screw thread is a wooden screw thread. An adapted bolt is thus created.

In an embodiment of the fastening means according to the invention the head is substantially rotation symmetrical with respect to the longitudinal axis of the shank. Thus it is possible to readjust the fastening means, as will be described further below.

In an embodiment of the fastening means the head is detachable from the shank. In a special embodiment thereof the head end part of the shank is provided with a second screw thread, and the head is provided with screw thread in the head cooperating therewith for screwing the head on the shank. As a result readjustment can be made possible. In a further embodiment thereof the thread of the screw thread, the first screw thread, differs from the thread of the second screw thread, preferably the pitch of the first screw thread is larger than the pitch of the second screw thread. As a result optimal readjustment is possible, particularly increasing the clamping force,

In an embodiment the head has a top surface and a circumferential wall that runs axially around the shank, which circumferential wall is provided with the resistance increasing means, and tapers off from the top surface. A diameter increase is thus realised from the top surface, as a result of which a construction part can be pressed over the head.

In an embodiment the shank is provided with a provision for tightening the fastening means using a tool, preferably a straight slot, a phillips slot, an inner square, socket hole or torx hole.

In an embodiment of the fastening means according to the invention the head is provided with at least one circumferential barb or beard, preferably at least three circumferential barbs.

In a further embodiment of the fastening means according to the invention the stop is a circumferential ring connected to the shank, preferably about halfway of the shank. Such a stop can close-off the hole in which the fastening means with the threaded end has been arranged.

In an embodiment of the use according to the invention the fastening means is screwed into the second construction part up to the stop so that a protruding part with the head protrudes from the second construction part, and the first construction part provided with a hole having a smaller diameter than the diameter of the head is placed on the second construction part with the protruding part in the hole.

Preferably the second construction part is made of a thermoplastic synthetic material, preferably polypropylene (PP) or polyethene (PE) or nylon (PA). Here the material of the second construction part shapes around the head, and is retained by the circumferential barbs. Moreover, because the barbs are circumferential, readjustment can take place by tightening the fastening means.

In an embodiment of the method according to the invention the hole in the bottom sill runs in the thickness direction of the bottom sill through it, and the bottom sill is readjusted by tightening the fastening means with a tool in the provision for tightening the fastening means.

In a further embodiment of the method according to the invention, the bottom sill is made of a thermoplastic synthetic material, preferably PE or PP. For connection of the bottom sill to the post a plinth block can be used. Furthermore in case the post is made of wood, for closing off the cross-cut end of the post, said cross-cut end may be provided with an EPDM flashing between the plinth block and the post.

The invention will be further elucidated on the basis of an exemplary embodiment of a fastening means and its use in accordance with the invention, in which:
Figure 1 shows a fastening means in cross-section for the attachment of a bottom sill in a post;
Figure 2 shows an alternative embodiment of the fastening means;
Figure 3 shows the fastening means of figure 2 in detail.

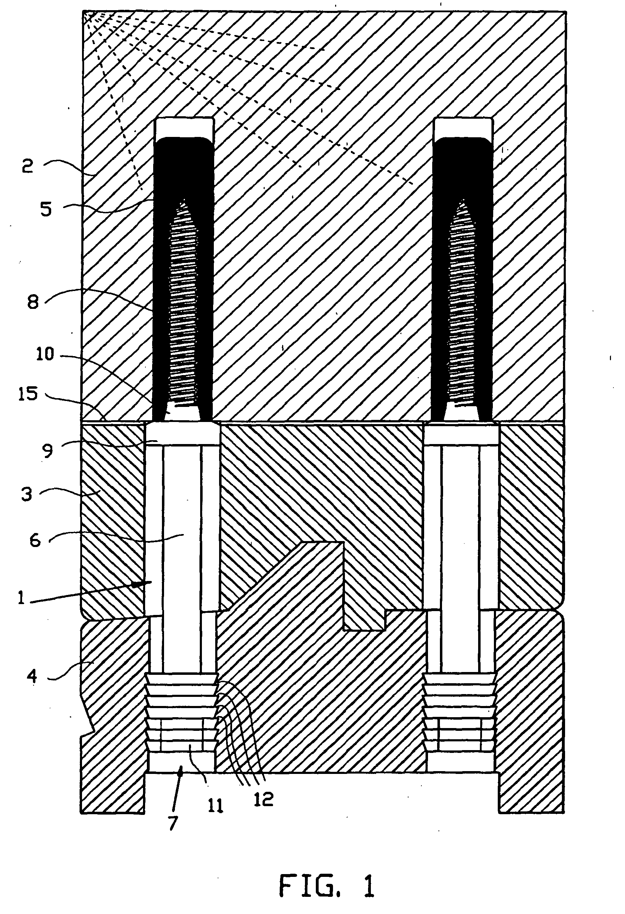

Figure 1 shows a fastening means in cross-section for the attachment of a post to a bottom sill by means of a plinth block.

Figure 1 shows a fastening means according to the invention for attaching a wooden post 2 provided with a plinth block 3 to a bottom sill 4, particularly a bottom sill made of synthetic material. Said construction of bottom sill, plinth block and post per se have been elaborately described in Dutch patents 1013818 and 1017991.

A plug 5 has been arranged in the wooden post 2, in which plug, in this case a nylon plug 5, the fastening means has been screwed in.

The fastening means 1 itself comprises a shank 6, a head 7 and from the end is provided with a screw thread part 8.

For closing off the passage through the wood and limiting the depth of screwing in, the shank of the fastening means is provided with a stop 9 which forms an annular stop surface 10.

The screw thread of the screw thread part 8 here approximately continues up to the stop 9. The stop 9 extends radially with respect to the shank 6 of the fastening means 1.

The circumference of the head 7 of the fastening means 1 is substantially rotation symmetrical, and provided with resistance increasing parts 12 for increasing the resistance when a tensile force is exerted on the fastening means in longitudinal direction towards the tip. In this embodiment several circumferential barbs have been arranged around the head 7.

Furthermore the top side of the head is provided with a socket hexagonal recess 11 for a socket head wrench, but this may also be a so-called torx hole or another engagement recess, such as a phillips head.

The fastening means according to the invention is used in the following methods.

The post 2 is provided with holes running from the cross-cut end of the post 2, wherein subsequently plugs 5 are arranged in the holes. An EPDM flashing 15 is subsequently arranged at the cross-cut end which flashing covers the entire cross-cut side of the post. Subsequently the plinth block 3 is arranged on the cross-cut end and the fastening means 1 according to the invention is inserted through the holes of the plinth block and screwed into the plug up to the stop 9.

After that the entire post with the part of the fastening means 1 protruding from it is driven or pressed into the holes in the synthetic bottom sill. The bottom sill is provided with holes that have a slightly smaller diameter than the head of the fastening means has (in this example the diameter of the head is 18 mm and the holes are 16 mm).

Because the bottom sill 4 is made of thermoplastic synthetic material as described in Dutch patent 1013818, the synthetic material is able to give way a little to offer room to the head whereas for the rest it shapes around the head as the synthetic material is thermoplastic.

Because the head is almost rotation symmetrical, it is possible to readjust the bottom sill by rotating the head.

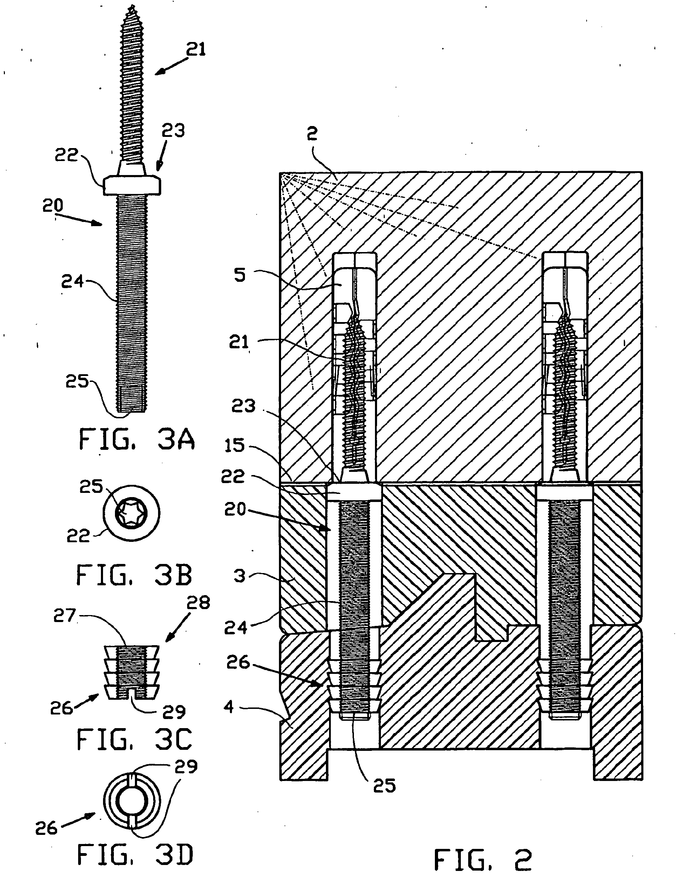

Figure 2 shows a cross-section through a post 2, plug 5, plinth block 3 and bottom sill 4 having an alternative embodiment of a fastening means according to the invention, wherein the shank 20 or shaft and the head 26 are detachable from each other, wherein the upper side, head side, of the shaft is provided with screw thread 24, and the head 26 is provided with a hole 27 that is threaded by which means the head can be screwed onto the shaft (also see figure 3A-3D for details).

When the bottom sill 4 is mounted on the fastening means, the clamping force can be further increased by rotating the shank by means of torx hole 25 because the pitch of both screw threads differs. The head 26 may also be readjusted on screw thread 24 by means of the slot 29.

Figures 3A-3D in detail again show the fastening means having the shank 20, with both threaded ends 21 and 24. Figure 3A shows the shank with stop in side view and figure 3B in top view. Screw thread 21 is a wooden screw thread having an end tapering into a tip.

The stop 22 is a ring attached to the shank which ring has a stop surface 23. The end of the shank near the head 26 is (here) provided with a torx hole 25.

Figure 3C show the head 26 in cross-section having hole 27 which is threaded, and circumferential barbs 28. At the upper side of the head grooves 29 have been arranged so that by using an adapted tool the head can be set with respect to the shank. Figure 3D shows the head 26 in top view with the grooves 29.

The fastening means according to the invention may for that matter be made of metal, such as stainless steel, glass-fibre reinforced synthetic material, galvanised steel, polypropylene (PP), polyethene (PE) or nylon.

In an alternative embodiment the shank is provided with screw thread at both sides of the stop having a head 26 thereon on each side. This fastening means is first slammed or pressed into the first construction part wherein the construction part is provided with a hole of which the diameter is slightly smaller than the diameter of the head, and subsequently the second construction part is arranged in a similar way. Preferably the screw threads are opposite then.

Further particulars of the fastening means or its use can be adapted by the expert.

## Claims

1. Fastening means (1) clampingly fastening at least two construction parts (2, 4) to each other, comprising a shank (6, 20) having a head (7, 26) at a head end of the shank (6, 20) and a thread tip (8, 21), resistance increasing means (12, 28) on the head (7, 26) for increasing the resistance with respect to a first of said construction parts (4) when the head is arranged in that first construction part (4) and active in the direction of the thread tip (8, 21), and a provision (11, 25) in the head (7, 26) or the end of the shank (6; 20) for offering engagement to a tool for screwing the fastening means (1) into a second of said constriction parts (2), wherein the resistance increasing means comprise saw-tooth shaped parts (12, 28) arranged along the head (7, 26) in the direction of the shank (6, 20), said saw-toothed parts (12, 28) having an opposite side oriented substantially normal to the longitudinal axis and to the thread tip (8, 21), or the resistance increasing means comprise at least one barb or beard having a barb function oriented to the thread tip, wherein for clampingly fastening said at least two construction parts (2, 4) to each other at least the thread tip (8, 21) is screwed into the second construction part (2) and said head (7, 26) is arranged In said first construction part.

2. Fastening means according to claim 1, wherein the head has a side surface that goes round axially with respect to the shank, which side surface is provided with the resistance increasing means.

3. Fastening means according to claim 1 or 2, wherein the head is provided with at least one circumferential barb having a barb function oriented to the thread tip, preferably at least three circumferential barbs.

4. Fastening means according to any one of the preceding claims, wherein the screw thread of the thread tip is wood screw thread.

5. Fastening means according to any one of the preceding claims, wherein the shank is furthermore provided with a stop extending radially with respect to the shank, wherein the stop preferably is a circumferential ring connected to the shank, more preferably about halfway of the shank.

6. Fastening means according to claim 5, wherein the stop is located between the head and the thread tip.

7. Fastening means according to claims 5-6, wherein the screw thread continues up to the stop.

8. Fastening means according to any one of the preceding claims, wherein the head is substantially rotation symmetrical with respect to the longitudinal axis of the shank.

9. Fastening means according to one or more of the preceding claims, wherein the head is detachable from the shank.

10. Fastening means according to claim 9, wherein the head end part of the shank is provided with a second screw thread, and the head is provided with a thread in the head cooperating therewith to screw the head on the shank.

11. Fastening means according to claim 10, wherein the thread of the thread tip differs from the thread of the second screw thread.

12. Fastening means according to claim 10 or 11, wherein the pitch of the screw thread of the thread tip is larger than the pitch of the second screw thread, wherein preferably the thread direction of both screw threads is equal, and/or wherein preferably the second screw thread is machine thread.

13. Fastening means according to any one of the claims 9-12, wherein the shank is provided with a provision for tightening the fastening means using a tool, preferably a straight slot, a phillips slot, an inner square, socket hole or torx hole.

14. Use of a fastening means (1) according to any one of the preceding claims for clampingly fastening a first construction part (4) to a second construction part (2), wherein the fastening means is screwed into the second construction part (2) so that at least the head (7, 26) protrudes from the second construction part (2), and the first construction part (4) provided with a hole having a smaller diameter than the diameter of the head is pressed on the second construction part with the head in the hole.

15. Use according to claim 15, wherein the fastening means is provided with the stop, wherein the fastening means is screwed up to the stop in the second construction part.

16. Method for mounting a bottom sill (4) to a post (2) using a fastening means (1) according to any one of the preceding claims, wherein a head end of the post is provided with at least one hole in longitudinal direction, the fastening means is screwed in or pressed or pushed into the post, the bottom sill is provided with a hole at the location where the post has to be attached, wherein the diameter of the hole is smaller than the diameter of the head of the fastening means, and the bottom sill is pressed onto the post wit the head of the fastening means in the hole.

17. Method according to claim 16, wherein at the head end of the post a layer of compressible material, preferably a layer of EPDM rubber, is arranged before arranging the fastening means, wherein preferably the fastening means fastens the bottom sill clampingly to the post while pressing in the layer of compressible material for at least 50 %.

18. Method according to claim 16 or 17, wherein the hole in the bottom sill runs through it in the thickness direction of the bottom sill, and the bottom sill is adjusted afterwards by tightening the fastening means with a tool in the provision for tightening the fastening means.

19. Method according to claims 16-18, wherein the fastening means is provided with the stop, wherein the diameter of the hole in the post is smaller than the diameter of the stop, and the fastening means is arranged up to the stop in the post.

20. Method according to claims 16-19, wherein between the post and the bottom sill a plinth block is arranged provided with a continuous hole of which the diameter is larger than the diameter of the head and larger than the diameter of the stop of the fastening means, when it is provided with the stop.

21. Method according to claims 16-20, wherein the bottom sill is a bottom sill made of thermoplastic synthetic material, preferably a PE or PP bottom sill.

## Patentansprüche

1. Verbindungsmittel (1) zur klemmenden Verbindung von wenigstens zwei Bauteilen (2, 4) miteinander, mit einem Schaft (6, 20) mit einem Kopf (7, 26) am Kopfende des Schaftes (6, 20) und einer Gewindespitze (8, 21), Widerstand erhöhenden Mitteln (12, 28) an dem Kopf (7, 26), die zum Erhöhen des Widerstands in Bezug auf ein erstes der Bauteile (4) wirken, wenn der Kopf in diesem ersten Bauteil (4) angeordnet ist, und die in Richtung der Gewindespitze (8, 21) wirksam sind, und einer Vorrichtung (11, 25) in dem Kopf (7, 26) oder dem Ende des Schaftes (6, 20), um einen Eingriff für ein Werkzeug zu bieten, um das Verbindungsmittel (1) in ein zweites der Bauteile (2) zu schrauben, wobei die den Widerstand erhöhenden Mittel sägezahnförmige Teile (12, 28) aufweisen, die entlang des Kopfes (7, 26) in Richtung des Schaftes (6, 20) angeordnet sind, wobei die sägezahnförmigen Teile (12, 28) eine gegenüberliegende Seite haben, die im Wesentlichen senkrecht zur Längsachse und zur Gewindespitze (8, 21) liegt, oder die den Widerstand erhöhenden Mittel wenigstens einen Widerhaken oder einen Stachel mit Widerhakenfunktion, der zu der Gewindespitze hin orientiert ist, aufweisen, wobei zum klemmenden Verbinden der wenigstens zwei Bauteile (2, 4) miteinander wenigstens die Gewindespitze (8, 21) in das zweite Bauteil (2) geschraubt wird und der Kopf (7, 26) in dem ersten Bauteil angeordnet ist.

2. Verbindungsmittel nach Anspruch 1, wobei der Kopf eine Seitenoberfläche hat, die axial in Bezug auf den Schaft herum verläuft und die mit den den Widerstand erhöhenden Mitteln versehen ist.

3. Verbindungsmittel nach Anspruch 1 oder 2, wobei der Kopf wenigstens einen umlaufenden Widerhaken mit einer Widerhakenfunktion orientiert auf die Gewindespitze hin hat, vorzugsweise wenigstens drei umlaufende Widerhaken.

4. Verbindungsmittel nach einem der vorhergehenden Ansprüche, wobei das Schraubengewinde der Gewindespitze ein Holzschraubengewinde ist.

5. Verbindungsmittel nach einem der vorhergehenden Ansprüche, wobei der Schaft weiterhin mit einem Stopper versehen ist, der sich radial in Bezug auf den Schaft erstreckt, wobei der Stopper vorzugsweise ein umlaufender Ring ist, der mit dem Schaft verbunden ist, vorzugsweise etwa in der Mitte des Schaftes.

6. Verbindungsmittel nach Anspruch 5, wobei der Stopper zwischen dem Kopf und der Gewindespitze angeordnet ist.

7. Verbindungsmittel nach Ansprüchen 5 bis 6, wobei das Schraubengewinde bis zu dem Stopper hin verläuft.

8. Verbindungsmittel nach einem der vorhergehenden Ansprüche, wobei der Kopf im Wesentlichen rotationssymmetrisch in Bezug auf die Längsachse des Schaftes ist.

9. Verbindungsmittel nach einem oder mehreren der vorhergehenden Ansprüche, wobei der Kopf von dem Schaft abnehmbar ist.

10. Verbindungsmittel nach Anspruch 9, wobei das Kopfendteil des Schaftes mit einem zweiten Schraubengewinde versehen ist und der Kopf mit einem Gewinde in dem Kopf versehen ist, das damit zusammenwirkt, um den Kopf an dem Schaft anzuschrauben.

11. Verbindungsmittel nach Anspruch 10, wobei das Gewinde der Gewindespitze sich von dem Gewinde des zweiten Schraubengewindes unterscheidet.

12. Verbindungsmittel nach Anspruch 10 oder 11, wobei die Steigung des Schraubengewindes der Gewindespitze größer als die Steigung des zweiten Schraubengewindes ist, wobei vorzugsweise die Gewinderichtung beider Schraubengewinde gleich ist und/oder wobei vorzugsweise das zweite Schraubengewinde ein Maschinengewinde ist.

13. Verbindungsmittel nach einem der Ansprüche 9 bis 12, wobei der Schaft mit einer Vorrichtung zum Anziehen der Verbindungsmittel unter Verwendung eines Werkzeugs versehen ist, vorzugsweise mit einem geraden Schlitz, einem Phillips-Schlitz, einem inneren Quadrat, einer Steckeröffnung oder einer Torx-Öffnung.

14. Verwendung eines Verbindungsmittels (1) nach einem der vorhergehenden Ansprüche zum klemmenden Verbinden eines ersten Bauteils (4) mit einem zweiten Bauteil (2), wobei das Verbindungsmittel in das zweite Bauteil (2) geschraubt wird, so dass wenigstens der Kopf (7, 26) aus dem zweiten Bauteil (2) vorsteht, und wobei das erste Bauteil (4), das mit einem Loch mit einem kleineren Durchmesser als der Durchmesser des Kopfs versehen ist, mit dem Kopf in dem Loch an das zweite Bauteil gedrückt wird.

15. Verwendung nach Anspruch 14, wobei das Verbindungsmittel mit dem Stopper versehen ist, wobei das Verbindungsmittel bis zum dem Stopper in das zweite Bauteil hineingeschraubt wird.

16. Verfahren zum Anbringen einer Bodenschwelle (4) an einem pfosten (2) unter Verwendung eines Verbindungsmittels (1) nach einem der vorhergehenden Ansprüche, wobei ein Kopfende des pfostens mit wenigstens einem Loch in Längsrichtung versehen ist, wobei das Verbindungsmittel in den pfosten geschraubt, gedrückt oder geschoben wird, wobei die Bodenschwelle mit einem Loch an der Stelle versehen ist, wo der pfosten zu befestigen ist, wobei der Durchmesser des Lochs kleiner als der Durchmesser des Kopfs des Verbindungsmittels ist und die Bodenschwelle an den pfosten mit dem Kopf des Verbindungsmittels in dem Loch gepresst wird.

17. Verfahren nach Anspruch 16, wobei an dem Kopfende des pfostens eine Lage von komprimierbarem Material, vorzugsweise eine Lage von EPDM-Kautschuk, angeordnet wird, bevor das Verbindungsmittel angeordnet wird, wobei das Verbindungsmittel die Bodenschwelle klemmend an den pfosten befestigt, während die Lage des komprimierbaren Materials um wenigstens 50% zusammengedrückt wird.

18. Verfahren nach Anspruch 16 oder 17, wobei das Loch in der Bodenschwelle durch diese in Dickenrichtung der Bodenschwelle hindurch verläuft und die Bodenschwelle danach eingestellt wird, indem das Verbindungsmittel mit einem Werkzeug in der Vorrichtung zum Anziehen des Verbindungsmittels festgezogen wird.

19. Verfahren nach den Ansprüchen 16 bis 18, wobei das Verbindungsmittel mit dem Stopper versehen ist, wobei der Durchmesser des Lochs in dem pfosten kleiner als der Durchmesser des Stoppers ist und wobei das Verbindungsmittel bis hinauf zum Stopper in dem pfosten angeordnet wird.

20. Verfahren nach Ansprüchen 16 bis 19, wobei zwischen den pfosten und der Bodenschwelle ein pflinthe angeordnet ist, der mit einem durchgängigen Loch versehen ist, dessen Durchmesser größer als der Durchmesser des Kopfes und größer als der Durchmesser des Stoppers des Verbindungsmittel ist, wenn dieses mit dem Stopper versehen ist.

21. Verfahren nach Ansprüchen 16 bis 20, wobei die Bodenschwelle eine Bodenschwelle aus thermoplastischem Kunststoffmaterial ist, vorzugsweise eine Bodenschwelle aus PE oder PP.

## Revendications

1. Moyen de fixation (1) fixant par serrage au moins deux éléments de construction (2, 4) l'un à l'autre, comprenant une tige (6, 20) munie d'une tête (7, 26) à une extrémité côté tête de la tige (6, 20) et une pointe filetée (8, 21), un moyen de renforcement de résistance (12, 28) sur la tête (7, 26) pour renforcer la résistance par rapport à un premier desdits éléments de construction (4) lorsque la tête est placée dans ce premier élément de construction (4) et active dans la direction de la pointe filetée (8, 21), et un accessoire (11, 25) dans la tête (7, 26) ou dans la extrémité de la tige (6, 20) pour permettre l'engagement d'un outil afin de visser le moyen de fixation (1) dans un deuxième desdits éléments de construction (2), le moyen de renforcement de résistance comportant des parties en dents de scie (12, 28) présentes le long de la tête (7, 26) dans la direction de la tige (6, 20), lesdites parties en dents de scie (12, 28) ayant une face opposée orientée sensiblement perpendiculairement à l'axe longitudinal et à la pointe filetée (8, 21), ou le moyen de renforcement de résistance comportant au moins un picot ou une barbule à fonction de picot orienté vers la pointe filetée, pour fixer par serrage lesdits au moins deux éléments de construction (2, 4) l'un à l'autre, au moins la pointe filetée (8, 21) est vissée dans le deuxième élément de construction (2) et ladite tête (7, 26) est placée dans ledit premier élément de construction.

2. Moyen de fixation selon la revendication 1, dans lequel la tête a une surface latérale qui tourne axialement par rapport à la tige, laquelle surface latérale étant munie du moyen de renforcement de résistance.

3. Moyen de fixation selon la revendication 1 ou 2, dans lequel la tête est munie d'au moins un picot périphérique à fonction de picot orienté vers la pointe fileté, de préférence au moins trois picots périphériques.

4. Moyen de fixation selon l'une quelconque des revendications précédentes, dans lequel le filetage de la pointe filetée est un filetage en bois.

5. Moyen de fixation selon l'une quelconque des revendications précédentes, dans lequel la tige est en outre munie d'une butée s'étendant radialement par rapport à la tige, la butée étant de préférence un anneau périphérique monté sur la tige, de manière encore plus préférentielle à peu près à mi-distance sur la tige.

6. Moyen de fixation selon la revendication 5, dans lequel la butée est située entre la tête et la pointe filetée.

7. Moyen de fixation selon les revendications 5 et 6, dans lequel le filetage se poursuit jusqu'à la butée.

8. Moyen de fixation selon l'une quelconque des revendications précédentes, dans lequel la tête est sensiblement symétrique, en rotation, par rapport à l'axe longitudinal de la tige.

9. Moyen de fixation selon une ou plusieurs des revendications précédentes, dans lequel la tête est détachable de la tige.

10. Moyen de fixation selon la revendication 9, dans lequel la partie terminale côté tête de la tige est munie d'un second filetage, et la tête est munie d'un filetage de tête coopérant avec celle-ci pour visser la tête sur la tige.

11. Moyen de fixation selon la revendication 10, dans lequel les filets de la pointe filetée diffèrent des filets du second filetage.

12. Moyen de fixation selon la revendication 10 ou 11, dans lequel le pas du filetage de la pointe filetée est plus grand que le pas du second filetage, la direction des filets des deux filetages étant de préférence égale, et/ou le second filetage étant de préférence filetage metrique.

13. Moyen de fixation selon l'une quelconque des revendications 9 à 12, dans lequel la tige est munie d'un accessoire pour serrer le moyen de fixation à l'aide d'un outil, de préférence une empreinte pour lame plate de tournevis, une empreinte cruciforme, un carré intérieur, un trou pour tête creuse ou une empreinte à six lobes.

14. Utilisation d'un moyen de fixation (1) selon l'une quelconque des revendications précédentes pour fixer par serrage un premier élément de construction (4) à un deuxième élément de construction (2), dans laquelle le moyen de fixation est vissé dans le deuxième élément de construction (2) de façon qu'au moins la tête (7, 26) dépasse du deuxième élément de construction (2), et le premier élément de construction (4) pourvu d'un trou d'un diamètre plus petit que le diamètre de la tête est appuyé sur le deuxième élément de construction, la tête étant dans le trou.

15. Utilisation selon la revendication 15, dans lequel le moyen de fixation est muni de la butée, le moyen de fixation étant vissé jusqu'à la butée dans le deuxième d'élément de construction.

16. Procédé pour assembler une piece d'appui (4) à un jambage (2) à l'aide d'un moyen de fixation (1) selon l'une quelconque des revendications précédentes, dans lequel une extrémité côté tête du jambage est pourvue d'au moins un trou dans la direction longitudinale, le moyen de fixation est vissé dans ou pressé ou poussé à l'intérieur du jambage, la piece d'appui est pourvue d'un trou à l'endroit où doit être fixé le jambage, le diamètre du trou étant plus petit que le diamètre de la tête du moyen de fixation, et la piece d'appui est pressée sur le jambage avec la tête du moyen de fixation dans le trou.

17. Procédé selon la revendication 16, dans lequel, à l'extrémité côté tête du jambage, une couche de matériau compressible, de préférence une couche de caoutchouc EPDM, est appliquée avant la mise en place du moyen de fixation, le moyen de fixation fixant par serrage la traverse basse au jambage de préférence par pressage sur au moins 50 % dans la couche de matériau compressible.

18. Procédé selon la revendication 16 ou 17, dans lequel le trou de la piece d'appui traverse celle-ci dans le sens de l'épaisseur de la piece d'appui, et la piece d'appui est ultérieurement ajustée en serrant le moyen de fixation à l'aide d'un outil placé dans l'accessoire pour serrer le moyen de fixation.

19. Procédé selon les revendications 16 à 18, dans lequel le moyen de fixation est muni de la butée, le diamètre du trou dans le jambage étant plus petit que le diamètre de la butée, et le moyen de fixation est mis en place jusqu'à la butée dans le jamage.

20. Procédé selon les revendications 16 à 19, dans lequel, entre le jambage et la piece d'appui, est mis en place un plinthe pourvu d'un trou continu dont le diamètre est plus grand que le diamètre de la tête et plus grand que le diamètre de la butée du moyen de fixation, lorsqu'il est muni de la butée.

21. Procédé selon les revendications 16 à 20, dans lequel la piece d'appui est une piece d'appui en matériau thermoplastique synthétique, de préférence une piece d'appui en PE ou en PP.
